# EUROPEAN PATENT SPECIFICATION

(11) **EP 4 037 351 B1**
(45) Date of publication and mention of the grant of the patent: **31.01.2024**
(21) Application number: 20885847.2
(22) Date of filing: 07.10.2020
(51) Int. Cl.: H04W 4/38, H04W 4/90, H04W 4/70, H04L 67/12, H04W 24/02, H04W 84/12, H04W 88/10, H04Q 9/00

(54) **INTERNET-OF-THINGS SENSOR MANAGEMENT METHOD AND WIRELESS ACCESS POINT**
INTERNET-DER-DINGE-SENSORVERWALTUNGSVERFAHREN UND DRAHTLOSER ZUGANGSPUNKT
PROCÉDÉ DE GESTION DE CAPTEUR DE L'INTERNET DES OBJETS ET POINT D'ACCÈS SANS FIL

(30) Priority: 08.11.2019 CN 201911089928
(43) Date of publication of application: 03.08.2022
(73) Proprietor: Huawei Technologies Co., Ltd., Longgang District Shenzhen, Guangdong 518129 (CN)
(72) Inventor: GAO, Hongyan, Shenzhen, Guangdong 518129 (CN); HUANG, Zhengquan, Shenzhen, Guangdong 518129 (CN)
(74) Representative: Goddar, Heinz J.
(86) International application number: PCT/CN2020/119858
(87) International publication number: WO 2021/088582

(56) References cited:
- EP-A1- 1 938 632
- WO-A1-2014/010852
- CN-A- 106 453 529
- CN-A- 106 453 529
- CN-A- 107 124 458
- CN-A- 107 124 458
- CN-A- 108 810 072
- CN-U- 206 209 311
- JP-A- 2018 197 731
- US-A1- 2007 032 219
- US-A1- 2010 087 208
- US-A1- 2015 195 365
- US-A1- 2015 195 365
- US-A1- 2017 085 393
- US-A1- 2018 084 395
- US-A1- 2018 152 894
- US-A1- 2019 205 936

## Description

### TECHNICAL FIELD

This application relates to the field of communications technologies, and in particular, to an internet-of-things sensor management method and a wireless access point.

### BACKGROUND

Currently, a wireless local area network (wireless local area network, WLAN) and an internet of things (internet of things, IoT) are deployed in a campus. However, a cabling manner of the WLAN and the IoT is relatively complex.

US 2015/195365 A1 describes an access point and a method for controlling an IoT device, using the access point. The method includes receiving a request for a service list from a user terminal through a smart access point communication with one or more IoT devices provided in one space; providing a list of virtual objects which are able to be provided out of virtual objects corresponding to the one or more IoT devices to the user terminal as the service list; receiving a control service request generated from the service list of the user terminal; identifying an IoT device corresponding to the control service request and requesting the identified IoT device for IoT control; and renewing a state of a virtual object corresponding to the identified IoT device based on a response of the identified IoT device and transmitting information on the state renewal to the user terminal.

US 2018/152894 A1 describes a method for implementing a low power consumption IoT network based on a Wi-Fi proxy device, comprising firstly pre-establishing a low power consumption Wi-Fi MAC layer link between the proxy device and at least one Wi-Fi IoT device; when the Wi-Fi loT device needs to perform data exchange with an internet server, carrying data in a packet payload structure defined in MAC layer, performing data pre-exchange with the proxy device via said low power consumption Wi-Fi MAC layer link, and after the pre-exchange having completed, entering into a low power consumption sleeping state, and the proxy device forwarding data received in the pre-exchange to the internet server through an IP address and a high level protocol specified in the MAC layer packet payload, via IP layer and above layer link.

EP 1938632 A1 describes a wireless network access point with an integrated sensor to sense and receive input unrelated to control of or data transmitted via the wireless network access point.

US 2010/087208 A1 describes a mobile telecommunications network including a micro base station. A method of controlling the micro base station includes: determining one or more registered users of the micro base station; determining a location of the one or more registered users; and causing the micro base station to transition between a first operational mode and a second operational mode depending upon the location of at least one of the one or more registered users.

JP 2018 197731 A relates to a disaster prevention cooperation system. A controller of the equipment management system instructs a transport robot to measure the communication status while traveling within a facility and to send it to the controller. The controller receives the measurement results and generates a wireless environment map indicating whether or not there are areas in the facility where communication is possible. When the controller receives a fire information signal from a disaster prevention monitoring panel, it generates route information to a predetermined destination through the communication-capable area based on the radio environment map and instructs the transport robot to move. The transport robot moves to the destination according to the instructed route information and performs disaster prevention support tasks such as transporting fire extinguishers and other equipment to the fire location. US 2007/032219 A1 describes methods for communicating emergency call capability information between a station and an access point (AP) in a wireless local area network. The methods include advertising by the AP of its emergency call capabilities and announcing by the station of its emergency call capabilities. The AP can advertise its emergency call capabilities in a beacon frame, a probe response frame, a reassociation response frame, or a reauthentication response frame. The station can announce its emergency call capabilities in an association request frame, a reassociation request frame, an authentication request frame, or a reauthentication request frame.

US 2019/205936 A1 describes a location tracking infrastructure for physical venues.

WO 2014/010852 A1 describes a method for generating access point sequence information according to path and accessing wireless communication network using said generated access point sequence information.

US 2018/084395 A1 describes methods for providing emergency personnel and other users access to a communications network during an emergency situation, event, or scenario. In some embodiments, the systems and methods provide mobile devices with access to a communications network during an emergency situation, by receiving, at an access point to the communications network, a request from a mobile device to connect to the communications network via the access point, determining the request includes user credentials associated with authorizing a user of the mobile device to use services provided by the communications network during the emergency situation, and connecting the mobile device to the communications network via the access point based on the user credentials.

US 2017/085393 A1 describes a mobile communications device for controlling a thermal appliance. The device comprises a first communications interface configured to communicate over a wireless local area network and a second communications interface configured to communicate over a wide area network. The device also comprises a processor coupled to the communications interfaces and configured to send, via the local area network, commands to control operation of the thermal appliance, and to receive, via the local area network, information relating to operation of the thermal appliance. Additionally, the device comprises a user interface for obtaining user input to control the thermal appliance and for providing a user with information relating to operation of the thermal appliance; wherein the processor is further configured to: monitor connection of the first communication interface with the wireless local area network, determine whether to trigger an alert in response to loss of connection of the first communication interface to the wireless local area network, and to send a command, based on user input provided in response to a triggered alert, to the thermal appliance via the second communications interface.

### SUMMARY

This application provides an internet-of-things sensor management method and a wireless access point, to provide a simple cabling manner for a WLAN and an IoT.

To resolve the foregoing technical problem, this application provides the following technical solution:
According to a first aspect, this application provides an internet-of-things sensor management method according to claim 1. One or more IoT sensors are integrated in a wireless access point (access point, AP) that has a WLAN function. The wireless AP stores one or more trigger conditions and one or more execution actions corresponding to the trigger condition/trigger conditions. After obtaining a measurement parameter collected by each IoT sensor, the wireless AP determines whether the obtained measurement parameter meets the one or more trigger conditions. When the measurement parameter meets a first trigger condition of the one or more trigger conditions, the wireless AP indicates an executor pointed to by a first execution action to execute the first execution action, where the first execution action is triggered by the first trigger condition. The executor is an execution device in an IoT system. The wireless AP may send an indication to the executor by using Bluetooth, infrared, a WLAN, or another wireless network; or may send an indication to the executor by using a wired network between the wireless AP and the executor. The IoT sensor is integrated in the wireless AP. Therefore, the wireless AP may control the executor to execute an action. In other words, the wireless AP is used to implement a function of an internet-of-things gateway, so that there is no need to independently deploy an internet-of-things gateway. The foregoing solution implements convergence between a WLAN and an IoT and provides a simple cabling solution for the WLAN and the loT.

In a possible implementation of the first aspect, before the wireless AP is delivered from the factory, the first trigger condition and the first execution action corresponding to the first trigger condition may be written into program code of the wireless AP in advance. Alternatively, the wireless AP may receive and store a first association rule sent by a controller, where the first association rule includes the first trigger condition and the first execution action corresponding to the first trigger condition.

According to the first aspect, the wireless AP further stores the one or more trigger conditions and a manner that is for changing a setting of the WLAN function of the wireless AP and that is triggered by the trigger condition/trigger conditions. The wireless AP may obtain in real time the measurement parameter collected by each IoT sensor, and determine whether the obtained measurement parameter meets a second trigger condition of the one or more trigger conditions. When the measurement parameter meets the second trigger condition, the wireless AP changes the setting of the WLAN function of the wireless AP. In an implementation form that is not according to the claims, the second trigger condition is that there is no human activity in a coverage area of the wireless AP, and a manner that is for changing the setting of the WLAN function and that is triggered by the second trigger condition is disabling the WLAN function. Alternatively and according to the claims, the second trigger condition is that an emergency case has occurred, and a manner that is for changing the setting of the WLAN function and that is triggered by the second trigger condition is canceling all WLAN authentications to open a WLAN. In this implementation, the wireless AP changes the setting of the WLAN function of the wireless AP based on the measurement parameter collected by the IoT sensor, to implement linkage between the WLAN and the loT.

In a possible implementation that is not according to the claims, that when the measurement parameter meets the second trigger condition, the wireless AP changes the setting of the WLAN function of the wireless AP includes: When the measurement parameter indicates that there is no human activity in the coverage area of the wireless AP, the wireless AP disables the WLAN function; or when the measurement parameter indicates that human activity appears in the coverage area of the wireless AP, the wireless AP enables the WLAN function. Specifically, the wireless AP may determine, based on infrared information collected by an infrared sensor in real time, whether there is human activity in the coverage area of the wireless AP. When there is no human activity, power supply to hardware that supports the WLAN function in the wireless AP is cut off. When the measurement parameter indicates that human activity appears in the coverage area of the wireless AP, power is supplied to the hardware that supports the WLAN function. In this implementation, when there is no human activity in the coverage area of the wireless AP, the wireless AP disables the WLAN function. This avoids waste of electric power resources and is also favorable for extending a service life of the WLAN function in the wireless AP. In addition, the sensor integrated in the wireless AP may be connected to the wireless AP by using an extension cable, thereby ensuring that the sensor can perform measurement in the entire coverage area of the wireless AP. Whether there is human activity in the coverage area of the wireless AP is determined by using the measurement parameter collected by the IoT sensor, thereby improving accuracy of a determining process.

In a possible implementation of the first aspect, that when the measurement parameter meets the second trigger condition, the wireless AP changes the setting of the WLAN function of the wireless AP includes: At least one IoT sensor integrated in the wireless AP includes a smoke sensor or a temperature sensor. The wireless AP may determine, based on a measurement parameter collected by the at least one sensor in real time, whether an emergency case has occurred. When the measurement parameter indicates that an emergency case has occurred, the wireless AP cancels all the WLAN authentications to open the WLAN. Specifically, after receiving a WLAN access request sent by a WLAN device, the wireless AP no longer pushes an authentication page to the WLAN device, but directly puts through the WLAN, so that the WLAN device can directly access the Internet. When the measurement parameter indicates that an emergency case has occurred, the wireless AP cancels all the WLAN authentications to open the WLAN. In this way, a user caught in the emergency case may implement communication connection with the outside world through the WLAN, to increase a probability of being rescued.

In a possible implementation of the first aspect, when the measurement parameter indicates that an emergency case has occurred, when receiving a web page access request sent by the WLAN device, the wireless AP may push a specific web page to the WLAN device, where the specific web page displays an evacuation map, an evacuation route, or the like, to assist in evacuation, thereby increasing a probability of being rescued.

In a possible implementation of the first aspect, after an association is established between the wireless AP and the WLAN device, the wireless AP may receive the WLAN access request sent by the WLAN device, where the WLAN access request carries account information or identification information of a terminal device. The WLAN device is a WLAN terminal device, and is specifically a mobile phone, a wearable device, a tablet computer, a notebook computer, or a palmtop computer. The wireless AP obtains the account information corresponding to the WLAN access request. Specifically, if the WLAN access request carries account information, the wireless AP extracts the account information from the WLAN access request. If the WLAN access request carries the identification information of the terminal device but does not carry account information, the wireless AP obtains account information corresponding to the identification information of the terminal device. Then, the wireless AP may send the account information to the controller through a switch. The account information is used by the controller to control, when it is determined based on account information sent by at least two wireless APs that a third trigger condition is met, an executor that is triggered by the third trigger condition and that is related to a location of the WLAN device to turn on or turn off. The third trigger condition is that a distance between the WLAN device and the executor is less than or equal to a fifth threshold. In this case, the executor is triggered to turn on. Alternatively, the third trigger condition is that a distance between the WLAN device and the executor is greater than or equal to a sixth threshold. In this case, the executor is triggered to turn off. In this implementation, by using the foregoing manner, the executor related to the location of the WLAN device is automatically controlled to turn on or turn off based on a behavior by which the WLAN device accesses the wireless AP, thereby improving automation and intelligent implementation of an executor management process.

In a possible implementation of the first aspect, when the measurement parameter indicates that an emergency case has occurred, the wireless AP obtains wireless access information that is obtained based on the WLAN function, where the wireless access information includes one or more of the following items: a quantity of WLAN devices accessing the WLAN function, location information of the WLAN devices, and identity information of users who use the WLAN devices. Identity information of a user includes one or more of the following items: an account number and the name, gender, and age. Then, the wireless AP may send a security alarm to the controller. The security alarm is used to indicate that an emergency case has occurred, the security alarm carries the wireless access information, and the security alarm may trigger the controller to display the wireless access information. In this implementation, when the measurement parameter indicates that an emergency case has occurred, the wireless AP reports, to the controller, the quantity of WLAN devices accessing the WLAN function, the location information of the WLAN devices, and the identity information of the users who use the WLAN devices. This helps rescuers get a preliminary understanding of to-be-rescued persons in the area in which the emergency case occurs, to evaluate severity of the emergency case and make a corresponding rescue strategy, making a rescue process more pertinent and improving a rescue success rate. In a possible implementation of the first aspect, an analog-to-digital conversion circuit is configured in the wireless AP. That the wireless AP obtains the measurement parameter collected by the IoT sensor may include: After obtaining a measurement parameter in a form of an analog signal collected by the IoT sensor, the analog-to-digital conversion circuit of the wireless AP converts the measurement parameter in the form of an analog signal into a measurement parameter in a form of a digital signal, and then transmits the measurement parameter in the form of a digital signal to a processor of the wireless AP.

According to a second aspect, this application further provides a wireless AP according to claim 5, which may be applied to a WLAN and IoT convergence field. The wireless AP includes a shell, a processor, a WLAN circuit, and an IoT sensor. The processor, the WLAN circuit, and the IoT sensor are integrated in the shell.

In a possible implementation of the second aspect, the IoT sensor and the processor are fixed on a same circuit board; and/or the IoT sensor is connected to the processor by using an extension cable.

In a possible implementation of the second aspect, an analog-to-digital conversion circuit is further disposed between the IoT sensor and the processor. The analog-to-digital conversion circuit is configured to: obtain a measurement parameter in a form of an analog signal collected by the IoT sensor, convert the measurement parameter in the form of an analog signal into a measurement parameter in a form of a digital signal, and transmit the measurement parameter in the form of a digital signal to the processor.

According to the second aspect, the processor is configured to: obtain a measurement parameter collected by the IoT sensor, where the IoT sensor is integrated in the wireless AP; and when the measurement parameter meets a first trigger condition, indicate an executor pointed to by a first execution action to execute the first execution action, where the first execution action is triggered by the first trigger condition.

According to the second aspect, the processor is further configured to: when the measurement parameter collected by the IoT sensor meets a second trigger condition, change a setting of a WLAN function of the wireless AP.

In a possible implementation of the second aspect that is not according to the claims, the processor is specifically configured to: when the measurement parameter collected by the IoT sensor indicates that there is no human activity in a coverage area of the wireless AP, disable the WLAN circuit.

According to the second aspect, the processor is specifically configured to: when the measurement parameter collected by the IoT sensor indicates that an emergency case has occurred, cancel all WLAN authentications to open a WLAN. In a possible implementation of the second aspect, the processor is further configured to: receive a WLAN access request sent by a WLAN device, obtain account information corresponding to the WLAN access request, and send the account information to a controller. The account information is used by the controller to control, when it is determined based on account information sent by at least two wireless APs that a third trigger condition is met, an executor that is triggered by the third trigger condition and that is related to a location of the WLAN device to turn on or turn off. In a possible implementation of the second aspect, the processor is further configured to: when the measurement parameter collected by the IoT sensor indicates that an emergency case has occurred, obtain wireless access information that is obtained based on the WLAN circuit, where the wireless access information includes one or more of the following items: a quantity of WLAN devices accessing the WLAN circuit, location information of the WLAN devices, and identity information of users who use the WLAN devices; and send a security alarm, where the security alarm is used to indicate that an emergency case has occurred, and the security alarm carries the wireless access information.

For specific implementation steps of the second aspect and the possible implementations of the second aspect performed by the composition elements of the wireless access point (AP) provided in the second aspect of this application, and beneficial effects brought by each implementation, refer to the descriptions in the first aspect and the possible implementations of the first aspect. Details are not described herein one by one again.

According to a third aspect, this application provides a computer-readable storage medium according to claim 9, and the computer-readable storage medium stores a computer program. When the computer program runs on a computer, the computer is enabled to perform the sensor management according to the first aspect or the second aspect.

According to a fourth aspect, this application provides a computer program according to claim 8. When the computer program runs on a computer, the computer is enabled to perform the sensor management according to the first aspect or the second aspect. According to a fifth aspect, this application provides a chip system. The chip system includes a processor, configured to support a baseband processing apparatus or a radio frequency apparatus in implementing the functions of the foregoing aspects, for example, sending or processing data and/or information in the foregoing method. In a possible design, the chip system further includes a memory, and the memory is configured to store program instructions and data that are necessary for the baseband processing apparatus or the radio frequency apparatus. The chip system may include a chip, or may include a chip and another discrete component.

### BRIEF DESCRIPTION OF DRAWINGS

FIG. 1 is a network architectural diagram of an internet-of-things sensor management system according to an embodiment of this application;
FIG. 2 is a schematic flowchart of an internet-of-things sensor management method according to an embodiment of this application;
FIG. 3 is another schematic flowchart of an internet-of-things sensor management method according to an embodiment of this application;
FIG. 4 is a schematic structural diagram of a wireless access point according to an embodiment of this application; and
FIG. 5 is another schematic structural diagram of a wireless access point according to an embodiment of this application.

### DESCRIPTION OF EMBODIMENTS

Embodiments of this application provide an internet-of-things sensor management method and a wireless access point, to provide a simple cabling manner for a WLAN and an IoT.

In the specification, claims, and accompanying drawings of this application, the terms "first", "second", and the like are intended to distinguish between similar objects, but do not necessarily indicate a specific order or sequence. It should be understood that the terms used in such a way are interchangeable in proper cases. This is merely a manner of distinguishing between objects with a same attribute in the embodiments of this application. In addition, the term "include" and any other variations thereof are intended to cover the non-exclusive inclusion, so that a process, method, system, product, or device that includes a series of components is not limited to those components, but may include other components not expressly listed or inherent to such a process, method, product, or device.

This application may be applied to various WLAN and IoT convergence scenarios. For example, in an office campus, a WLAN and executors such as a light, an air conditioner, an alarm horn, and a fire water spray valve are usually disposed. A campus administrator may manage the executors such as the light, the air conditioner, the alarm horn, and the fire water spray valve in the office campus by using an IoT. For another example, in a residential house, a WLAN and executors such as a light, an air conditioner, a water heater, and a refrigerator are usually disposed. The executors such as the light, the air conditioner, the water heater, and the refrigerator in the residential house may also be managed by using an IoT. In various WLAN and IoT convergence scenarios, a simple cabling manner needs to be provided for the WLAN and the IoT. It should be understood that the example application scenarios herein are merely intended to facilitate understanding of this solution rather than limiting this solution. A person of ordinary skills in the art can know that with development of technologies and emergence of new scenarios, the technical solution provided in the embodiments of this application is also applicable to similar technical problems.

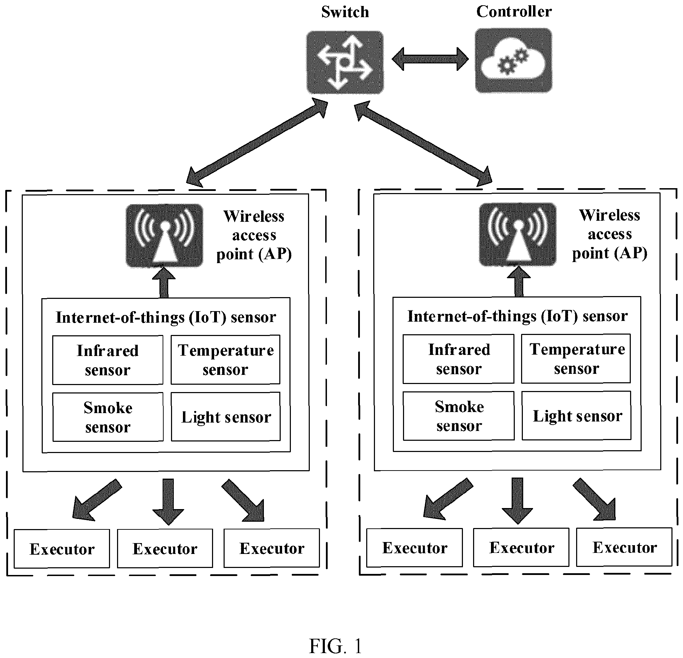

The following describes the embodiments of this application with reference to the accompanying drawings. Refer to FIG. 1. FIG. 1 is a network architectural diagram of an internet of things (IoT) sensor management system according to an embodiment of this application. FIG. 1 includes a wireless AP, an IoT sensor, an executor, a switch, and a controller.

The wireless AP has a WLAN function and at least one IoT sensor is integrated in the wireless AP. The wireless AP is configured to obtain a measurement parameter collected by the IoT sensor. As shown in the figure, the sensor may be specifically represented as an infrared sensor, a temperature sensor, a smoke sensor, a light sensor, a sensor of another type, or the like. Specific sensors to be configured need to be determined in combination with a requirement of an actual scenario, and are not limited herein. The wireless AP is further in communication connection with at least one executor, and is configured to send a control instruction to the executor, to control the executor to execute a corresponding execution action. In some implementations, the executor has a WLAN function, so that the wireless AP manages the executor by sending a wireless signal to the executor. In some other implementations, at least one interface may be disposed on the wireless AP, so that the executor may be connected to the interface of the wireless AP by using a wired network. In this way, the wireless AP and the executor implement communication connection by using the wired network.

The wireless AP is further connected to the switch. The switch is configured to provide data forwarding for implementing the WLAN function of the wireless AP. Specifically, the data forwarding includes: sending, to the Internet (Internet), data uploaded by the wireless AP; transmitting data from the Internet to the wireless AP; and when the wireless AP is connected to a WLAN device, sending account information of the WLAN device obtained by the wireless AP to the controller, so that the controller performs authentication on the account information of the WLAN device. Optionally, in some implementations, the switch is further configured to provide data forwarding for the wireless AP to implement IoT sensor management. Specifically, the data forwarding may include forwarding an association rule that is between a sensor and an executor and that is generated by the controller to the wireless AP, or sending IoT related information such as a measurement parameter collected by the wireless AP by using the IoT sensor to the controller. The switch may have a power over Ethernet (power over Ethernet, PoE) system capability. The controller may be configured to support the wireless AP only in implementing the WLAN function, or may be further configured to support the wireless AP in implementing IoT sensor management.

It should be noted that although FIG. 1 shows six executors, two wireless APs, one switch, and one controller, it should be understood that quantities of switches and controllers disposed in one campus, a quantity of wireless APs connected to one switch, and a quantity of executors that one wireless AP is configured to control all should be determined in combination with an actual application scenario. Examples in FIG. 1 are merely intended to facilitate understanding of this solution rather than limiting this solution.

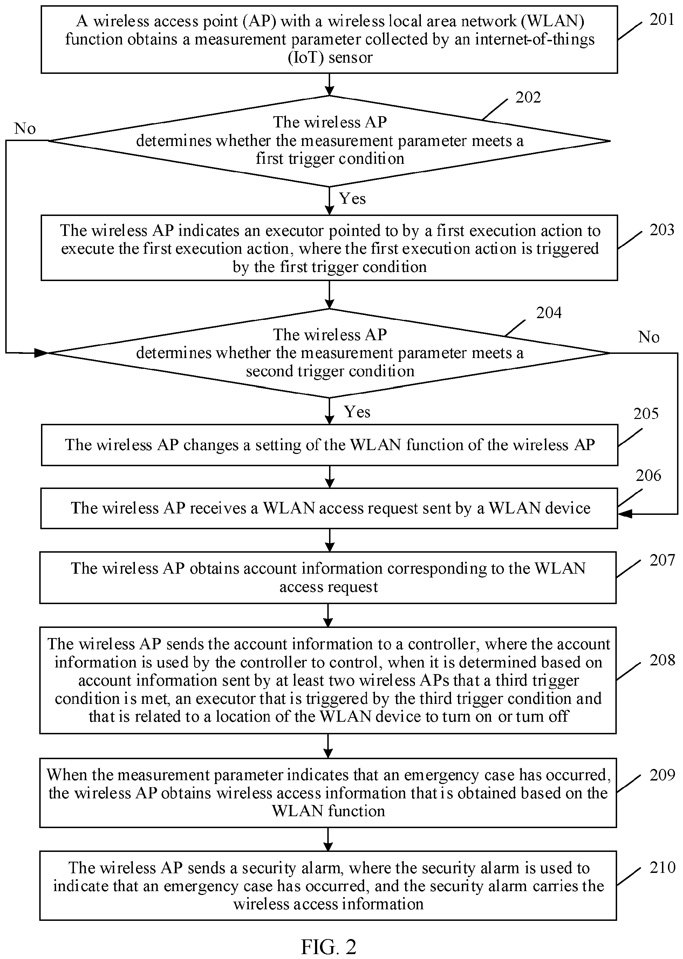

With reference to the foregoing descriptions, the following starts describing a specific implementation process of an internet-of-things sensor management method according to an embodiment of this application. In this embodiment of this application, refer to FIG. 2. FIG. 2 is a schematic flowchart of the internet-of-things sensor management method according to this embodiment of this application. The internet-of-things sensor management method according to this embodiment of this application may include the following steps.

201. A wireless AP with a WLAN function obtains a measurement parameter collected by an IoT sensor.

In this embodiment of this application, one or at least two IoT sensors are integrated in the wireless AP with the WLAN function. The IoT sensor may collect a measurement parameter in real time. Correspondingly, the wireless AP may obtain, in real time, the measurement parameter collected by each IoT sensor. Integration means that the IoT sensor and a processor are fixed on a same circuit board, or that the IoT sensor is connected to the processor by using an extension cable. The IoT sensor is a sensor configured for implementing control over one or more executors in an IoT, and may be specifically represented as an infrared sensor, a temperature sensor, a smoke sensor, a light sensor, a sensor of another type, or the like. Correspondingly, a parameter type of the measurement parameter obtained by the wireless AP may be infrared information, temperature information, smoke concentration information, luminance information, or the like. Further, the infrared information may be used to determine whether there is human activity in a coverage area of the wireless AP. The foregoing examples of IoT sensors and measurement parameters are merely intended to facilitate understanding of this solution rather than limiting this solution.

Specifically, each IoT sensor may report a measurement parameter to the wireless AP at a preset interval. For example, a value of the preset interval may be 10 milliseconds, 20 milliseconds, 30 milliseconds, 50 milliseconds, or another interval value. Alternatively, each IoT sensor may report a collected measurement parameter to the wireless AP in real time. The processor of the wireless AP processes the reported measurement parameter based on a processing capability of the processor.

More specifically, the wireless AP obtains a measurement parameter in a form of an analog signal collected by the IoT sensor, and converts the measurement parameter in the form of an analog signal into a measurement parameter in a form of a digital signal. Further, an analog-to-digital conversion circuit is configured in the wireless AP. After obtaining the measurement parameter in the form of an analog signal collected by the IoT sensor, the analog-to-digital conversion circuit converts the measurement parameter in the form of an analog signal into a measurement parameter in a form of a digital signal, and then transmits the measurement parameter in the form of a digital signal to the processor of the wireless AP, for the processor to process the measurement parameter in the form of a digital signal. 202. The wireless AP determines whether the measurement parameter meets a first trigger condition. If the measurement parameter meets the first trigger condition, go to step 203. If the measurement parameter does not meet the first trigger condition, go to step 204.

In this embodiment of this application, the wireless AP prestores one or more trigger conditions. The one or more trigger conditions may be classified into one or more types. A trigger condition of a first type in the one or more trigger conditions is used to trigger an execution action that points to an executor. The first trigger condition is a trigger condition of the first type and is used to trigger a first execution action. The first execution action is an execution action specific to an executor. After obtaining the measurement parameter collected by each IoT sensor, the wireless AP determines whether the obtained measurement parameter meets the first trigger condition of the one or more trigger conditions. Both a quantity of trigger conditions of the first type and a quantity of execution actions triggered by a trigger condition of a first type may be determined in combination with a quantity of executors, a quantity of sensors, or another factor in an actual scenario. For example, the first trigger condition is that a smoke concentration is greater than or equal to a first threshold. Correspondingly, the first execution action is opening a water spray valve. For another example, the first trigger condition is that luminance is less than or equal to a second threshold. Correspondingly, the first execution action is turning on a light. For another example, the first trigger condition is that a temperature is greater than or equal to a third threshold. Correspondingly, the first execution action is turning on refrigeration of an air conditioner. Alternatively, the first trigger condition is that a temperature is less than or equal to a fourth threshold. Correspondingly, the first execution action is turning on heating of an air conditioner. Alternatively, the first trigger condition and the first execution action may be specifically represented in other forms, which are not enumerated exhaustively herein.

Specifically, for a process in which the wireless AP determines whether the measurement parameter meets the first trigger condition, in an implementation, after obtaining the measurement parameter collected by each IoT sensor, the wireless AP may traverse all trigger conditions in the wireless AP that are used for performing a determining operation, to determine whether the obtained measurement parameter meets a first trigger condition of the trigger conditions. In another implementation, after obtaining the measurement parameter collected by each IoT sensor, the wireless AP may determine a parameter type of the measurement parameter, obtain a first trigger condition corresponding to the parameter type, and then determine whether the measurement parameter meets the first trigger condition. For example, the obtained measurement parameter is smoke concentration information. Then, the corresponding first trigger condition is that a smoke concentration is greater than or equal to the first threshold.

Specifically, for a process in which the wireless AP prestores one or more trigger conditions and one or more execution actions corresponding to the trigger condition/trigger conditions, in an implementation, before the wireless AP is delivered from the factory, a trigger condition and an execution action triggered by the trigger condition may be written into program code of the wireless AP in advance. In this way, the wireless AP may determine, based on the preconfigured program code, whether the measurement parameter meets any first trigger condition of the one or more trigger conditions. Optionally, a switch button corresponding to each executor may be further configured on a shell of the wireless AP, so that a user can select a to-be-managed executor by using the switch button. Correspondingly, the wireless AP may select, from a plurality of preset trigger conditions based on an executor selection operation of the user, one or more trigger conditions used for performing a determining operation. For example, the program code of the wireless AP includes trigger conditions for controlling a water spray valve, a light, and an air conditioner, and execution actions. Switch buttons respectively corresponding to the water spray valve, the light, and the air conditioner are disposed on the shell of the wireless AP. The trigger condition for controlling the water spray valve and an execution action triggered by the trigger condition, the trigger condition for controlling the light and an execution action triggered by the trigger condition, and the trigger condition for controlling the air conditioner and an execution action triggered by the trigger condition are configured in the wireless AP. If the user turns on switches of the light and the air conditioner and turns off a switch of the water spray valve, when performing a determining operation on the measurement parameter, the wireless AP uses only the trigger condition for managing the light and the trigger condition for managing the air conditioner. It should be understood that the examples herein are merely intended to facilitate understanding of this solution rather than limiting this solution.

In another implementation, alternatively, a controller may send a first association rule to the wireless AP by using a wireless network or a wired network. After receiving the first association rule, the wireless AP stores the first association rule locally. The first association rule includes one or more trigger conditions and an execution action triggered by the trigger condition/trigger conditions, and includes the first trigger condition and the first execution action corresponding to the first trigger condition. The first association rule sent by the controller to the wireless AP may be specifically represented as a command line, a yet another next generation (yet another next generation, YANG) model, or in another form. More specifically, an administrator may configure the first trigger condition and the first execution action in the wireless AP on a display interface of the controller based on an actual status of an application scenario. The controller generates the first association rule based on the configuration operation of the administrator, and then sends the first association rule to the wireless AP. Optionally, the administrator may further modify the first trigger condition and the first execution action in the first association rule on the display interface of the controller, and then send an updated first association rule to the wireless AP. The wireless AP stores the updated first association rule. Further, the wireless AP may store the first association rule by using a table, an index, or another form. The following describes a specific form of the first association rule by using an example in which the first association rule is stored in a form of a table.

**Table 1**

| Trigger condition | Execution action |
|---|---|
| A smoke concentration is greater than or equal to 0.06% | Open a water spray valve |
| A temperature is greater than or equal to 30 celsius degrees | Turn on refrigeration of an air conditioner |
| Luminance is lower than 100 nits | Turn on a light |

Refer to Table 1. In the example in Table 1, the first association rule includes correspondences between three trigger conditions and three execution actions. It should be understood that the example in Table 1 is merely intended to facilitate understanding of this solution.

203. The wireless AP indicates an executor pointed to by the first execution action to execute the first execution action, where the first execution action is triggered by the first trigger condition.

In this embodiment of this application, the wireless AP prestores the first trigger condition and a first execution condition. There is a correspondence between the first trigger condition and the first execution action. Then, after determining in step 202 that the measurement parameter meets the first trigger condition, the wireless AP obtains the first execution action triggered by the first trigger condition, and then indicates the executor pointed to by the first execution action to execute the first execution action. The executor is an execution device in an IoT system, for example, a light, an air conditioner, a water spray valve, a television set, a water heater, or another device. Specifically, an indication may be sent to the executor by using a wireless network, for example, by using Bluetooth, infrared, a WLAN, or another wireless network, to control the executor to execute the first execution action. Alternatively, at least one interface may be preset on the wireless AP. The wireless AP establishes a wired network with the executor by using the at least one interface, and sends an indication to the executor by using the wired network, to control the executor to execute the first execution action.

204. The wireless AP determines whether the measurement parameter meets a second trigger condition. If the measurement parameter meets the second trigger condition, go to step 205. If the measurement parameter does not meet the second trigger condition, go to step 206.

In some embodiments of this application, the one or more trigger conditions that may be prestored in the wireless AP may further include a trigger condition of a second type. The trigger condition of the second type triggers a change to a setting of the WLAN function of the wireless AP. The foregoing division of the trigger condition of the first type and the trigger condition of the second type may be manual division. Alternatively, the one or more trigger conditions in the wireless AP may not be classified into types. The second trigger condition is a trigger condition of the second type and is used to trigger a change to the setting of the WLAN function of the wireless AP. After obtaining the measurement parameter collected by each IoT sensor, the wireless AP determines whether the measurement parameter meets the second trigger condition of the at least one trigger condition. Specifically, for both a process in which the wireless AP determines whether the measurement parameter meets the second trigger condition and a process in which the wireless AP prestores the second trigger condition and a manner that is for changing the setting of the WLAN function of the wireless AP and that is triggered by the second trigger condition, refer to the descriptions in step 203. Details are not described herein again. When the second trigger condition and the manner that is for changing the setting of the WLAN function and that is triggered by the second trigger condition are sent in a form of a second association rule to the wireless AP by the controller, for a specific representation form of the second association rule, refer to the description of the first association rule in step 203. Details are not described herein again.

In one case (not according to the claims), the second trigger condition is that there is no human activity in the coverage area of the wireless AP, and the manner that is for changing the setting of the WLAN function and that is triggered by the second trigger condition is disabling the WLAN function. Alternatively, the second trigger condition is that human activity appears in the coverage area of the wireless AP, and the manner that is for changing the setting of the WLAN function and that is triggered by the second trigger condition is enabling the WLAN function. In another case (according to the claims), the second trigger condition is that an emergency case has occurred, and the manner that is for changing the setting of the WLAN function and that is triggered by the second trigger condition is canceling all WLAN authentications to open a WLAN. For example, the emergency case may be that a fire disaster, an explosion, or an emergency case of another type has occurred. Specific representation forms of the second trigger condition and the manner for changing the setting of the WLAN function are not enumerated exhaustively herein.

205. The wireless AP changes the setting of the WLAN function of the wireless AP.

In some embodiments of this application, when determining that the measurement parameter collected by the IoT sensor meets the second trigger condition of the at least one trigger condition, the wireless AP obtains the manner that is for changing the setting of the WLAN function and that is triggered by the second trigger condition, and then changes the setting of the WLAN function of the wireless AP. By using the foregoing manner, the wireless AP may further change the setting of the WLAN function of the wireless AP based on the measurement parameter collected by the IoT sensor, to implement linkage between the WLAN and the IoT.

Specifically, in one case (not according to the claims), when the measurement parameter indicates that there is no human activity in the coverage area of the wireless AP, the wireless AP disables the WLAN function; or when the measurement parameter indicates that human activity appears in the coverage area of the wireless AP, the wireless AP enables the WLAN function. More specifically, the at least one IoT sensor integrated in the wireless AP includes an infrared sensor. One or more infrared sensors may be configured in the coverage area of the wireless AP. The wireless AP may determine, based on infrared information collected by all infrared sensors in real time, whether there is human activity in the coverage area of the wireless AP. When there is no human activity, the WLAN function is disabled. To be specific, power supply to hardware that supports the WLAN function in the wireless AP is cut off. When it is determined that human activity reappears in the coverage area of the wireless AP, the WLAN function is enabled. To be specific, power is supplied to the hardware that supports the WLAN function in the wireless AP. Optionally, the wireless AP may further obtain wireless access information that is obtained based on the WLAN function. When no human activity is discovered in the coverage area of the wireless AP based on the infrared information collected by the infrared sensor, and it is determined, based on the wireless access information, that there is no WLAN device accessing the WLAN function, it may be determined that there is no human activity in the coverage area of the wireless AP. The foregoing manner can make a process of determining whether there is human activity in the coverage area of the wireless AP more rigorous, further improving accuracy of a determining process.

In this implementation that is not according to the claims, when there is no human activity in the coverage area of the wireless AP, the wireless AP disables the WLAN function. This avoids waste of electric power resources and is also favorable for extending a service life of the WLAN function in the wireless AP. In addition, the sensor integrated in the wireless AP may be connected to the wireless AP by using an extension cable, thereby ensuring that the sensor can perform measurement in the entire coverage area of the wireless AP. Whether there is human activity in the coverage area of the wireless AP is determined by using the measurement parameter collected by the IoT sensor, thereby improving accuracy of a determining process.

In a case that is according to the claims, when the measurement parameter indicates that an emergency case has occurred, the wireless AP cancels all WLAN authentications to open a WLAN. More specifically, the at least one IoT sensor integrated in the wireless AP includes a smoke sensor, a temperature sensor, or a sensor of another type. Then, the wireless AP may determine, based on the measurement parameter collected by the at least one sensor in real time, whether an emergency case has occurred. For example, when a smoke concentration collected by the smoke sensor is greater than or equal to 0.1%, it may be considered that a fire disaster has occurred. For another example, when a temperate parameter collected by the temperature sensor is greater than or equal to 500 degrees, it may be considered that an explosion has occurred. All scenarios are not enumerated exhaustively herein. Then, the wireless AP cancels all WLAN authentications to open the WLAN. More specifically, after the wireless AP receives a WLAN access request sent by a WLAN device, the wireless AP no longer pushes an authentication page to the WLAN device, but directly puts through the WLAN, so that the WLAN device can directly access the Internet (Internet). In this embodiment, when the measurement parameter indicates that an emergency case has occurred, the wireless AP cancels all the WLAN authentications to open the WLAN. In this way, a user caught in the emergency case may implement communication connection with the outside world through the WLAN, to increase a probability of being rescued. Optionally, when receiving a web page access request sent by the WLAN device, the wireless AP may further push a specific web page to the WLAN device. The specific web page displays information such as an evacuation map or an evacuation route. Specifically, access redirection may be implemented for a hypertext transfer protocol (HTTP) web page in a web page access request initiated by the user, to direct the web page access request to the foregoing specific web page. The foregoing manner is favorable for further increasing a probability of the user being rescued.

It should be understood that steps 204 and 205 are optional steps. If steps 204 and 205 are not to be performed, step 206 may be performed directly after step 203 is completed. If steps 204 and 205 are to be performed, an execution sequence between step 202 and step 204 is not limited in this embodiment of this application. Step 202 may be performed before step 204, step 204 may be performed before step 202, or steps 202 and 204 may be performed at the same time.

206. The wireless AP receives a WLAN access request sent by a WLAN device.

In some embodiments of this application, after an association is established between the wireless AP and the WLAN device, the wireless AP may receive the WLAN access request sent by the WLAN device. The WLAN device is a WLAN terminal device, and may be specifically represented as a mobile phone, a wearable device, a tablet computer, a notebook computer, a palmtop computer, or a WLAN terminal device of another type. For a wireless AP that needs to be accessed by using an account number and a password, the WLAN access request may directly carry account information, where the account information includes the account number and the password. The account information may be input by the user on a display interface of the WLAN device, or may be prestored in the WLAN device and obtained by the WLAN device from a storage medium of the WLAN device. Alternatively, the WLAN access request may not carry account information, but carries identification information of another type of the terminal device, for example, a media access control (media access control, MAC) address, an international mobile subscriber identity (international mobile subscriber identity, IMSI), or identification information of another type of the terminal device. 207. The wireless AP obtains account information corresponding to the WLAN access request.

In some embodiments of this application, after the wireless AP receives the WLAN access request sent by the WLAN device, if the WLAN access request carries account information, the wireless AP may directly extract the account information from the WLAN access request. The wireless AP may store account information of a user. If the WLAN access request does not carry account information but carries identification information of another type of the terminal device, the wireless AP may obtain account information corresponding to the identification information of the terminal device carried in the WLAN access request.

208. The wireless AP sends the account information to the controller, where the account information is used by the controller to control, when it is determined based on account information sent by at least two wireless APs that a third trigger condition is met, an executor that is triggered by the third trigger condition and that is related to a location of the WLAN device to turn on or turn off.

In some embodiments of this application, after obtaining the account information corresponding to the WLAN access request, the wireless AP may send the account information to the controller through a switch. One switch may be connected to at least two wireless APs. Therefore, the controller may determine, based on account information sent by the at least two wireless APs, whether the third trigger condition is met. When it is determined that the third trigger condition is met, the wireless AP controls the executor that is triggered by the third trigger condition and that is related to the location of the WLAN device to turn on or turn off. The third trigger condition may be that a distance between the WLAN device and the executor is less than or equal to a fifth threshold. In this case, the foregoing executor is triggered to turn on. The third trigger condition may alternatively be that a distance between the WLAN device and the executor is greater than or equal to a sixth threshold. In this case, the foregoing executor is triggered to turn off. Values of the fifth threshold and the sixth threshold may be the same or different. Further, the controller stores a correspondence between a WLAN device and an executor. A WLAN device and an executor in an association relationship are used by a same user. A correspondence between a WLAN device and an executor may be one-to-one or one-to-many. An executor may be specifically represented as a door, a personal computer, an air conditioner, or another device. The controller may store a device identifier of each executor to uniquely identify the executor, to facilitate management of the executors by the controller. The device identifier of the executor may be specifically represented as a numeric code or a character code, for example, "0000005", "KT00005", or "LJQ01KT". When the device identifier of the executor is specifically represented as a character code, the device identifier may be determined in combination with a type of the executor, a name of a user of the executor, or another factor.

Specifically, the controller may exchange data with the at least two wireless APs through the switch, and the controller may learn of a location of each wireless AP in advance. Therefore, the controller may determine, based on the account information sent by the at least two wireless APs, location movement regularity of the WLAN device corresponding to the same account information. When the controller discovers, based on the account information sent by the at least two wireless APs, that the target WLAN device is becoming closer to the target executor, and when a distance is less than or equal to the fifth threshold, the controller enables the target executor. A value of the fifth threshold may be 10 meters, 5 meters, 3 meters, 2 meters, 1 meter, or another value. The target WLAN device and the target executor are used by a same user. Correspondingly, when the controller discovers, based on the account information sent by the at least two wireless APs, that the target WLAN device is becoming farther away from the target executor, and when a distance is greater than or equal to the sixth threshold, the controller disables the target executor. A value of the sixth threshold may be 10 meters, 5 meters, 3 meters, 2 meters, 1 meter, or another value. Specific values of the fifth threshold and the sixth threshold may be determined based on a size of an application scenario, a type of a target executor, or another factor.

Optionally, there may be at least two executors in a correspondence with one WLAN device. Alternatively, different thresholds may be set for different executors. For example, when a WLAN device is 10 meters away from an air conditioner, the air conditioner is turned on; when the WLAN device is 2 meters away from a door, the door is opened, and so on. Examples are not enumerated exhaustively herein. The controller stores a correspondence among account information, executor identification information, and the fifth threshold (or the sixth threshold). The controller may store the correspondence by using a table, an index, or in another form. In this example, the controller stores the correspondence in a form of a table.

**Table 2**

| User | Account number of a WLAN device | Identifier of an executor | Fifth threshold |
|---|---|---|---|
| Manager Li | 188****5384 | Device identifier of an air conditioner | 10 meters |
| Manager Li | 188****5384 | Device identifier of a door | 2 meters |
| Manager Li | 188****5384 | Device identifier of a computer | 1 meter |

Refer to Table 2. Table 2 shows a correspondence between the WLAN device used by a user (that is, Manager Li in Table 2) whose account number is "188****5384" and the executors. For data in the first row, when a distance from the WLAN device whose account number is "188****5384" to the air conditioner used by Manager Li is less than or equal to 10 meters, the air conditioner used by Manager Li is controlled to turn on. For data in the second row and data in the third row, refer to the description of the data in the first row for understanding. In an actual case, the controller may further store identification information of another terminal device or user identity information of another type, for example, the gender and the age. Alternatively, the controller may store only account information and does not store user identity information or the like. The example in Table 2 is merely intended to facilitate understanding of this solution rather than limiting this solution.

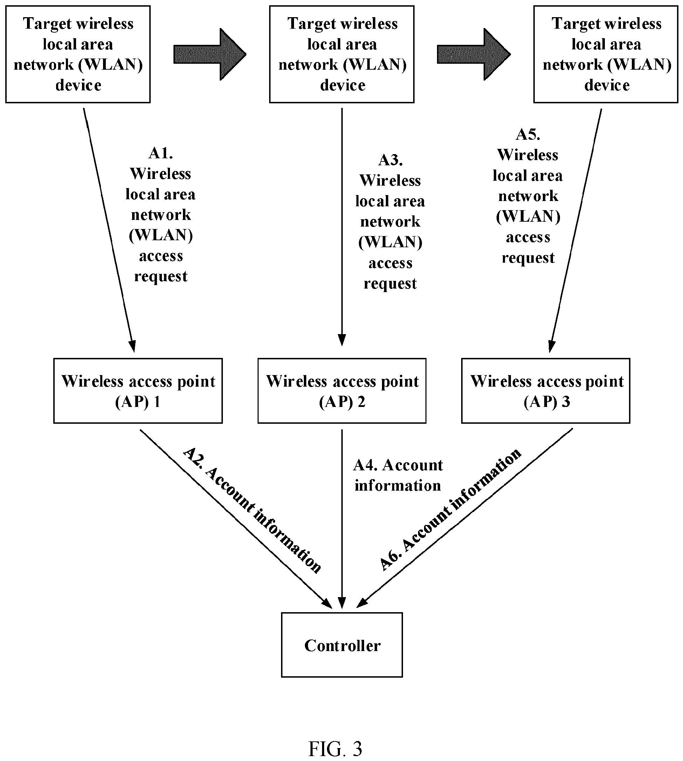

To further understand this solution, refer to FIG. 3. FIG. 3 is a schematic flowchart of an internet-of-things sensor management method according to an embodiment of this application. In FIG. 3, for example, it is determined based on account information sent by three APs that a third trigger condition is met. A1: A wireless AP 1 receives a WLAN access request sent by a target WLAN device. A2: After obtaining account information corresponding to the WLAN access request, the wireless AP 1 sends the account information to the controller. A3: A wireless AP 2 receives a WLAN access request sent by the target WLAN device. A4: After obtaining account information corresponding to the WLAN access request, the wireless AP 2 sends the account information to the controller. A5: A wireless AP 3 receives a WLAN access request sent by the target WLAN device. A6: After obtaining account information corresponding to the WLAN access request, the wireless AP 3 sends the account information to the controller. The controller determines, based on the account information sent by the three APs, that the target WLAN device corresponding to the same account information is becoming closer to a target air conditioner. After receiving the account information sent by the wireless AP 3, the controller determines that a distance between the WLAN device and the target air conditioner is less than 10 meters, and controls the target air conditioner to turn on. The example in FIG. 3 is merely intended to facilitate understanding of this solution rather than limiting this solution.

In this embodiment of this application, after receiving the WLAN access request sent by the WLAN device, the wireless AP obtains the account information corresponding to the WLAN access request, and sends the account information to the controller. This enables the controller to control, when it is determined based on the account information sent by the at least two wireless APs that the third trigger condition is met, the executor that is triggered by the third trigger condition and that is related to the location of the WLAN device to turn on or turn off. By using the foregoing manner, the executor related to the location of the WLAN device is automatically controlled to turn on or turn off based on a behavior by which the WLAN device accesses the wireless AP, thereby improving automation and intelligent implementation of an executor management process.

It should be understood that steps 206 to 208 are optional steps. If steps 206 to 208 are not to be performed, it may be considered that execution ends after step 205 is completed. If steps 206 to 208 are to be performed, an execution sequence between steps 201 to 205 and steps 206 to 208 is not limited in this embodiment of this application. Steps 201 to 205 may be performed before steps 206 to 208, steps 206 to 208 may be performed before steps 201 to 205, or steps 206 to 208 may be performed before, after, or at the same time with any one of steps 201 to 205.

209. When the measurement parameter indicates that an emergency case has occurred, the wireless AP obtains wireless access information that is obtained based on the WLAN function.

In some embodiments of this application, when the measurement parameter indicates that an emergency case has occurred, the wireless AP obtains the wireless access information that is obtained based on the WLAN function. The wireless access information includes one or more of the following items: a quantity of WLAN devices accessing the WLAN function, location information of the WLAN devices, and identity information of users who use the WLAN devices.

Specifically, when the measurement parameter indicates that an emergency case has occurred, the wireless AP obtains the wireless access information that is obtained based on the WLAN function. The wireless access information may include the quantity of WLAN devices accessing the WLAN function and/or the location information of the WLAN devices, or may further include identity information of some users who use the WLAN devices. Identity information of a user includes one or more of the following items: an account number and the name, gender, and age. Some WLAN devices of the WLAN devices accessing the WLAN function are WLAN devices that have accessed the wireless AP by using an account number and a password. When such WLAN devices access the WLAN function of the wireless AP again, account numbers of users who use the WLAN devices can be obtained. Optionally, in some scenarios, the wireless AP may further obtain information such as the name, gender, or age of a user based on an account number of the user.

210. The wireless AP sends a security alarm, where the security alarm is used to indicate that an emergency case has occurred, and the security alarm carries the wireless access information.

In some embodiments of this application, the wireless AP may send a security alarm to the controller, where the security alarm is used to indicate that an emergency case has occurred, and the security alarm carries the wireless access information, so that the controller may display the wireless access information on the display interface. Optionally, when the wireless access information carries an account number that accesses the WLAN function of the wireless AP, alternatively, the controller may obtain, based on the account number that accesses the WLAN function, other identity information such as the name, gender, or age of a user who uses the WLAN device. In this embodiment, when the measurement parameter indicates that an emergency case has occurred, the wireless AP reports, to the controller, the quantity of WLAN devices accessing the WLAN function, the location information of the WLAN devices, and the identity information of the users who use the WLAN devices. This helps rescuers get a preliminary understanding of to-be-rescued persons in the area in which the emergency case occurs, to evaluate severity of the emergency case and make a corresponding rescue strategy, making a rescue process more pertinent and improving a rescue success rate.

It should be understood that steps 209 and 210 are optional steps. If steps 209 and 210 are not to be performed, it may be considered that execution ends after step 208 is completed. If steps 209 and 210 are to be performed, an execution sequence between steps 201 to 208 and steps 209 and 210 is not limited in this embodiment of this application. Steps 201 to 208 may be performed before steps 209 and 210, steps 209 and 210 may be performed before steps 201 to 208, or steps 209 and 210 may be performed before, after, or at the same time with any one of steps 201 to 208.

In this embodiment of this application, the IoT sensor is integrated in the wireless access point (AP). The wireless AP collects the measurement parameter by using the sensor; and when the measurement parameter collected by the sensor meets the first trigger condition, obtains the executor pointed to by the first execution action and controls the executor to perform the first execution action. In other words, the wireless AP is used to implement a function of an internet-of-things gateway, so that there is no need to independently deploy an internet-of-things gateway. This implements convergence of a WLAN and an IoT on an edge access side, and provides a simple cabling solution for the WLAN and the IoT, thereby saving expenses of basic network cabling.

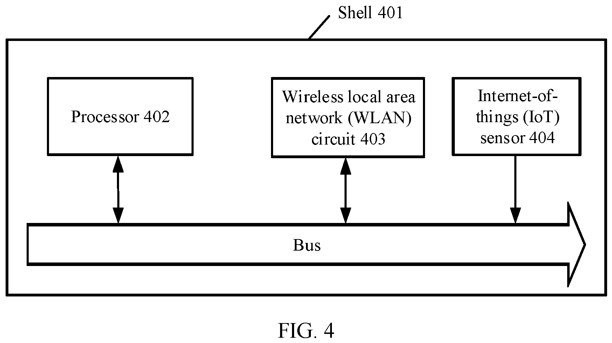

To better implement the foregoing solutions in the embodiments of this application, the following further provides a related device configured to implement the solutions. Specifically, refer to FIG. 4. FIG. 4 is a schematic structural diagram of a wireless access point according to an embodiment of this application. The wireless AP includes a shell 401, a processor 402, a WLAN circuit 403, and an IoT sensor 404. The processor 402, the WLAN circuit 403, and at least one IoT sensor 404 are integrated in the shell 401. Specifically, some elements of an IoT sensor 404 may be located in the shell 401, and some elements may be exposed outside the shell 401. For example, an IoT sensor 404 is a smoke sensor. That the smoke sensor is integrated in the shell 401 means that some circuits of the smoke sensor are located in the shell 401 and a smoke sensing port of the smoke sensor may be exposed outside the shell 401. For another example, an IoT sensor 404 is an infrared sensor. That the infrared sensor is integrated in the shell 401 means that some circuits of the infrared sensor are located in the shell 401 and a probe portion of the infrared sensor may be exposed outside the shell 401. The WLAN circuit 403 is configured to implement a WLAN function of the wireless AP. For a quantity and a specific representation form of IoT sensors 404, refer to the descriptions in the foregoing embodiment. In this embodiment of this application, an IoT sensor 404 is integrated in the wireless AP. The wireless AP may be used to implement a function of an internet-of-things gateway, so that there is no need to independently deploy an internet-of-things gateway. This implements convergence of a WLAN and an IoT on an edge access side, and provides a simple cabling solution for the WLAN and the IoT, thereby saving expenses of basic network cabling. Specifically, the processor 402 and the WLAN circuit 403 may be connected to each other by using a bus. For an IoT sensor 404 integrated in the shell 401, the IoT sensor 404 and the processor 402 may be fixed on a same circuit board. For an IoT sensor 404 located outside the shell 401, the IoT sensor 404 may be connected to the processor 402 by using an extension cable. This embodiment of this application provides a specific manner of connection between the IoT sensor 404 and the processor 402, to improve implementability of this solution. In addition, the manner of connecting the IoT sensor 404 to the processor 402 by using an extension cable can expand a measurement range of the sensor 404, thereby improving reliability of a measurement parameter collected by the sensor 404.

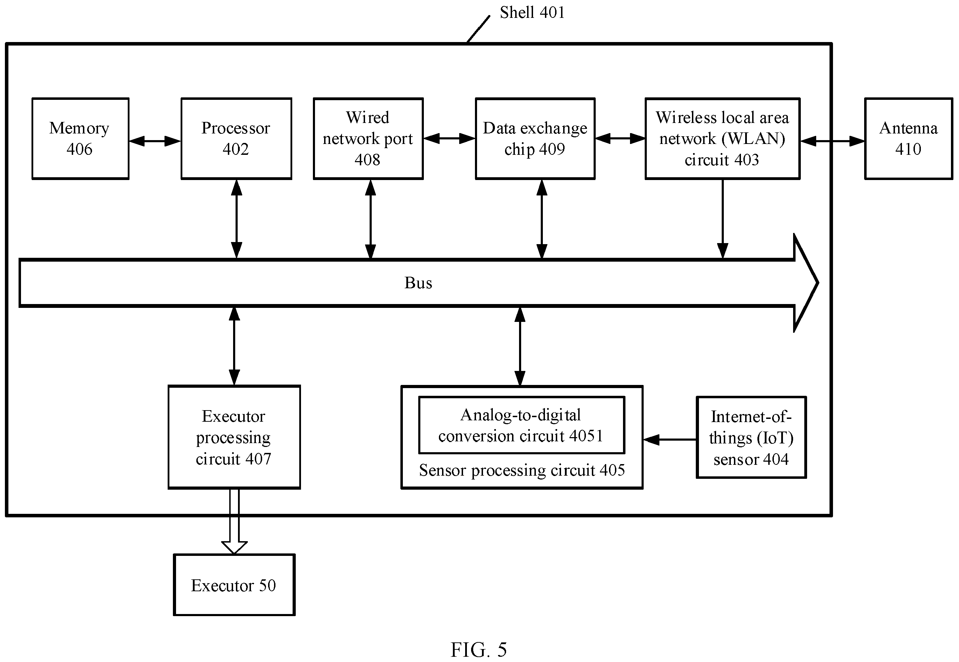

Optionally, refer to FIG. 5. FIG. 5 is a schematic structural diagram of a wireless access point according to an embodiment of this application. A sensor processing circuit 405 is further disposed between the processor 402 and the IoT sensor 404. The sensor processing circuit 405 is located inside the shell 401, and is connected to the processor 402 by using a bus. The sensor processing circuit 405 and the IoT sensor 404 that is located in the shell 401 are fixed on a same circuit board, or the sensor processing circuit 405 is connected to the IoT sensor 404 that is located outside the shell 401 by using an extension cable. The sensor processing circuit 405 includes an analog-to-digital conversion circuit 4051. The analog-to-digital conversion circuit 4051 is configured to: obtain a measurement parameter in a form of an analog signal collected by each IoT sensor 404, convert the measurement parameter in the form of an analog signal into a measurement parameter in a form of a digital signal, and transmit the measurement parameter in the form of a digital signal to the processor 402. The sensor processing circuit 405 further includes a filter circuit, another circuit, or the like.

The wireless AP in FIG. 4 may be configured to perform the steps performed by the wireless AP in the IoT sensor management method shown in FIG. 2 and FIG. 3. Specifically, the processor 402 is configured to: obtain a measurement parameter collected by the IoT sensor 404, where the IoT sensor 404 is integrated in the wireless AP; and when the measurement parameter meets a first trigger condition, indicate an executor pointed to by a first execution action to execute the first execution action, where the first execution action is triggered by the first trigger condition.

According to the claims, the processor 402 is further configured to: when the measurement parameter collected by the IoT sensor 404 meets a second trigger condition, change a setting of a WLAN function of the wireless AP.

In a possible design that is not according to the claims, the processor 402 is specifically configured to: when the measurement parameter collected by the IoT sensor 404 indicates that there is no human activity in a coverage area of the wireless AP, disable the WLAN circuit 403.

According to the claims, the processor 402 is specifically configured to: when the measurement parameter collected by the IoT sensor 404 indicates that an emergency case has occurred, cancel all WLAN authentications to open a WLAN.

In a possible design, the processor 402 is further configured to: receive a WLAN access request sent by a WLAN device, obtain account information corresponding to the WLAN access request, and send the account information to a controller. The account information is used by the controller to control, when it is determined based on account information sent by at least two wireless APs that a third trigger condition is met, an executor that is triggered by the third trigger condition and that is related to a location of the WLAN device to turn on or turn off.

In a possible design, the processor 402 is further configured to: when the measurement parameter collected by the IoT sensor 404 indicates that an emergency case has occurred, obtain wireless access information that is obtained based on the WLAN circuit 403, where the wireless access information includes one or more of the following items: a quantity of WLAN devices accessing the WLAN circuit 403, location information of the WLAN devices, and identity information of users who use the WLAN devices; and send a security alarm, where the security alarm is used to indicate that an emergency case has occurred, and the security alarm carries the wireless access information.

Optionally, refer to FIG. 5 again. The wireless AP may further include one or more of a memory 406, an executor processing circuit 407, a wired network port 408, a data exchange chip 409, or at least one antenna 410. The memory 406, the executor processing circuit 407, and the data exchange chip 409 are located inside the shell 401. The wired network port 408 is located on the shell 401. The at least one antenna 410 is located outside the shell 401.

The memory 406 is connected to the processor 402, and is configured to store a program, instructions, and data. The executor processing circuit 407 is connected to the processor 402 by using a bus, and is configured to convert indication information in a form of a digital signal generated by the processor 402 into indication information in a form of an analog signal, and send the indication information in the form of an analog signal to an executor 50 by using a wireless network such as Bluetooth, infrared, or a WLAN circuit. Optionally, alternatively, the indication information in the form of an analog signal may be sent to the executor 50 by using a wired network. The wired network port 408 may be connected to the processor 402 by using a bus, and is configured to connect to a switch, so that the wireless AP can access the wired network.

The data exchange chip 409 may be connected to the processor 402 by using a bus, and may store a MAC table and a virtual local area network (virtual local area network, VLAN) allocation table. The data exchange chip 409 may obtain data in a downlink direction by using the wired network port 408 and obtain data in an uplink direction by using the WLAN circuit 403, and determine a target address of data based on the stored MAC table or VLAN allocation table. The WLAN circuit 403 may be connected to the processor 402 by using a bus, and is configured to: under control of the processor 402, send information in the downlink direction to the WLAN device by using the at least one antenna 410 and receive information in the uplink direction by using the at least one antenna 410. The antenna 410 is configured to receive or send information.

It should be noted that content such as information exchange and execution processes between components in the wireless access point (wireless AP) is based on a same concept as the method embodiment of this application. For specific content, refer to the descriptions in the foregoing method embodiment of this application. Details are not described herein again.

An embodiment of this application further provides a computer program product. When the computer program product is run on a computer, the computer is enabled to perform the steps performed by the wireless AP in the methods described in the embodiments shown in FIG. 2 and FIG. 3.

An embodiment of this application further provides a computer-readable storage medium. The computer-readable storage medium stores a program used for signal processing. When the program is run on a computer, the computer is enabled to perform the steps performed by the wireless AP in the methods described in the embodiments shown in FIG. 2 and FIG. 3.

The wireless AP provided in the embodiments of this application may be specifically a chip. The chip includes a processing unit and a communications unit. The processing unit may be, for example, a processor. The communications unit may be, for example, an input/output interface, a pin, or a circuit. The processing unit may execute computer executable instructions stored in a storage unit, so that the chip in the wireless AP performs the steps performed by the wireless AP in the method described in the embodiments shown in FIG. 2 and FIG. 3. Optionally, the storage unit is a storage unit in the chip, for example, a register or a cache. The storage unit may alternatively be a storage unit located outside the chip in a wireless access device end, for example, a read-only memory (read-only memory, ROM) or another type of static storage device that can store static information and instructions, or a random access memory (random access memory, RAM).

The processor mentioned anywhere above may be a general-purpose central processing unit, a microprocessor, an ASIC, or one or more integrated circuits configured to control program execution of the method according to the first aspect.

All or some of the foregoing embodiments may be implemented by using software, hardware, firmware, or any combination thereof. When software or firmware is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a tape), an optical medium (for example, an optical disc), a semiconductor medium (for example, a solid-state drive (SSD)), or the like.

The invention is defined by the independent claims. Advantageous embodiments of the invention are given by the dependent claims.

## Claims

1. An internet-ofthings, IoT, sensor management method, wherein the method comprises:
obtaining (201), by a wireless access point, AP, with a wireless local area network, WLAN, function, a measurement parameter collected by an IoT sensor (404), wherein the IoT sensor is integrated in the wireless AP;
sending (203), by the wireless AP when the measurement parameter meets a first trigger condition, an indication to a first execution device (50) of an IoT system, the first execution device being pointed to by a first execution action,
wherein the indication is an indication to execute the first execution action, wherein the first execution action is triggered by the first trigger condition; and
changing (205), by the wireless AP, a setting of the WLAN function of the wireless AP when the measurement parameter meets a second trigger condition;
wherein the changing (205), by the wireless AP, a setting of the WLAN function of the wireless AP when the measurement parameter meets a second trigger condition comprises:
canceling, by the wireless AP when the measurement parameter indicates that an emergency case has occurred, all WLAN authentications to open a WLAN.

2. The method according to claim 1, wherein the method further comprises:
receiving (206), by the wireless AP, a WLAN access request sent by a WLAN device;
obtaining (207), by the wireless AP, account information corresponding to the WLAN access request;
sending (208), by the wireless AP, the account information to a controller, and
using (208), by the controller, the account information to control, when it is determined based on account information sent by at least two wireless APs that a third trigger condition is met, a second execution device (50) of the IoT system, the second execution device being triggered by the third trigger condition and the second execution device being related to a location of the WLAN device, to turn on or turn off.

3. The method according to claim 1, wherein the method further comprises:
obtaining (209), by the wireless AP when the measurement parameter indicates that an emergency case has occurred, wireless access information that is obtained based on the WLAN function, wherein the wireless access information comprises one or more of the following items: a quantity of WLAN devices accessing the WLAN function, location information of the WLAN devices, and identity information of users who use the WLAN devices; and
sending (210), by the wireless AP, a security alarm, wherein the security alarm is used to indicate that an emergency case has occurred, and the security alarm carries the wireless access information.

4. The method according to claim 1, wherein the obtaining (201), by a wireless AP, a measurement parameter collected by an IoT sensor (404) comprises:
obtaining, by the wireless AP, a measurement parameter in a form of an analog signal collected by the IoT sensor (404); and
converting, by the wireless AP, the measurement parameter in the form of an analog signal into a measurement parameter in a form of a digital signal.

5. A wireless access point, AP, wherein the wireless AP comprises a shell (401), a processor (402), a wireless local area network, WLAN, circuit (403), and an internet-of-things, IoT, sensor (404); and the processor, the WLAN circuit, and the IoT sensor are integrated in the shell;
wherein the processor (402) is configured to perform the steps performed by the wireless AP in the method according to any one of claims 1 to 3.

6. The wireless AP according to claim 5, wherein
the IoT sensor (404) and the processor (402) are fixed on a same circuit board; and/or
the IoT sensor (404) is connected to the processor (402) by using an extension cable.

7. The wireless AP according to claim 5, wherein an analog-to-digital conversion circuit (4051) is further disposed between the IoT sensor (404) and the processor (402); and
the analog-to-digital conversion circuit is (4051) configured to: obtain a measurement parameter in a form of an analog signal collected by the IoT sensor (404), convert the measurement parameter in the form of an analog signal into a measurement parameter in a form of a digital signal, and transmit the measurement parameter in the form of a digital signal to the processor (402).

8. A computer program comprising instructions which, when executed by a wireless access point, AP, cause the wireless access point of claim 5 to execute the steps of the method of claim 1.

9. A computer-readable medium having stored thereon the computer program of claim 8.

## Patentansprüche

1. Internet-der-Dinge-Sensorverwaltungsverfahren, IoT-Sensorverwaltungsverfahren, wobei das Verfahren Folgendes umfasst:
Erhalten (201), durch einen drahtlosen Zugangspunkt, AP, mit einer drahtlosen lokalen Netzwerkfunktion, WLAN-Funktion, eines Messparameters, der von einem IoT-Sensor (404) erfasst wird, wobei der IoT-Sensor in den drahtlosen AP integriert ist;
Senden (203), durch den drahtlosen AP, wenn der Messparameter eine erste Auslösebedingung erfüllt, einer Angabe an eine erste Ausführungsvorrichtung (50) eines IoT-Systems, wobei auf die erste Ausführungsvorrichtung durch eine erste Ausführungsaktion hingewiesen wird, wobei die Angabe eine Angabe ist, die erste Ausführungsaktion auszuführen, wobei die erste Ausführungsaktion durch die erste Auslösebedingung ausgelöst wird; und
Ändern (205), durch den drahtlosen AP, einer Einstellung der WLAN-Funktion des drahtlosen AP, wenn der Messparameter eine zweite Auslösebedingung erfüllt;
wobei das Ändern (205), durch den drahtlosen AP, einer Einstellung der WLAN-Funktion des drahtlosen AP, wenn der Messparameter eine zweite Auslösebedingung erfüllt, Folgendes umfasst:
Abbrechen, durch den drahtlosen AP, wenn der Messparameter angibt, dass ein Notfall aufgetreten ist, aller WLAN-Authentifizierungen, um ein WLAN zu öffnen.

2. Verfahren nach Anspruch 1, wobei das Verfahren ferner Folgendes umfasst:
Empfangen (206), durch den drahtlosen AP, einer WLAN-Zugangsanforderung, die durch eine WLAN-Vorrichtung gesendet wird;
Erhalten (207), durch den drahtlosen AP, von Kontoinformationen, die der WLAN-Zugangsanforderung entsprechen;
Senden (208), durch den drahtlosen AP, der Kontoinformationen an eine Steuerung und
Verwenden (208), durch die Steuerung, der Kontoinformationen, um, wenn basierend auf Kontoinformationen, die von mindestens zwei drahtlosen APs gesendet werden, festgestellt wird, dass eine dritte Auslösebedingung erfüllt ist, eine zweite Ausführungsvorrichtung (50) des IoT-Systems zu steuern, wobei die zweite Ausführungsvorrichtung durch die dritte Auslösebedingung ausgelöst wird und die zweite Ausführungsvorrichtung mit einem Standort der WLAN-Vorrichtung zum Ein- oder Ausschalten in Zusammenhang steht.

3. Verfahren nach Anspruch 1, wobei das Verfahren ferner Folgendes umfasst:
Erhalten (209), durch den drahtlosen AP, wenn der Messparameter angibt, dass ein Notfall aufgetreten ist, von drahtlosen Zugangsinformationen, die basierend auf der WLAN-Funktion erhalten werden, wobei die drahtlosen Zugangsinformationen eines oder mehrere der folgenden Elemente umfassen: eine Menge von WLAN-Vorrichtungen, die auf die WLAN-Funktion zugreifen, Standortinformationen der WLAN-Vorrichtungen und Identitätsinformationen von Benutzern, die die WLAN-Vorrichtungen verwenden; und
Senden (210), durch den drahtlosen AP, eines Sicherheitsalarms, wobei der Sicherheitsalarm verwendet wird, um anzugeben, dass ein Notfall aufgetreten ist, und der Sicherheitsalarm die drahtlosen Zugangsinformationen trägt.

4. Verfahren nach Anspruch 1, wobei das Erhalten (201), durch einen drahtlosen AP, eines Messparameters, der von einem IoT-Sensor (404) erfasst wird, Folgendes umfasst:
Erhalten, durch den drahtlosen AP, eines Messparameters in Form eines analogen Signals, das von dem IoT-Sensor (404) erfasst wird; und
Umwandeln, durch den drahtlosen AP, des Messparameters in Form eines analogen Signals in einen Messparameter in Form eines digitalen Signals.

5. Drahtloser Zugangspunkt, AP, wobei der drahtlose AP eine Hülle (401), einen Prozessor (402), eine drahtlose lokale Netzwerkschaltung, WLAN-Schaltung, (403) und einen Internet-der-Dinge-Sensor, IoT-Sensor, (404) umfasst; und der Prozessor, die WLAN-Schaltung und der IoT-Sensor in der Hülle integriert sind;
wobei der Prozessor (402) dazu konfiguriert ist, die Schritte, die durch den drahtlosen AP in dem Verfahren nach einem der Ansprüche 1 bis 3 durchgeführt werden, durchzuführen.

6. Drahtloser AP nach Anspruch 5, wobei
der IoT-Sensor (404) und der Prozessor (402) auf derselben Leiterplatte befestigt sind; und/oder
der IoT-Sensor (404) über ein Verlängerungskabel mit dem Prozessor (402) verbunden ist.

7. Drahtloser AP nach Anspruch 5, wobei eine Analog-Digital-Umwandlungsschaltung (4051) ferner zwischen dem IoT-Sensor (404) und dem Prozessor (402) angeordnet ist; und
die Analog-Digital-Umwandlungsschaltung (4051) dazu konfiguriert ist: einen Messparameter in Form eines analogen Signals, das von dem IoT-Sensor (404) erfasst wird, zu erhalten, den Messparameter in Form eines analogen Signals in einen Messparameter in Form eines digitalen Signals umzuwandeln und den Messparameter in Form eines digitalen Signals an den Prozessor (402) zu übertragen.

8. Computerprogramm, das Anweisungen umfasst, die, wenn sie durch einen drahtlosen Zugangspunkt, AP, ausgeführt werden, den drahtlosen Zugangspunkt nach Anspruch 5 veranlassen, die Schritte des Verfahrens nach Anspruch 1 auszuführen.

9. Computerlesbares Medium, auf dem das Computerprogramm nach Anspruch 8 gespeichert ist.

## Revendications

1. Procédé de gestion de capteur de l'Internet des objets, IoT, dans lequel le procédé comprend :
l'obtention (201), par un point d'accès sans fil, AP, doté d'une fonction de réseau local sans fil, WLAN, d'un paramètre de mesure collecté par un capteur IoT (404), dans lequel le capteur IoT est intégré dans l'AP sans fil ;
l'envoi (203), par l'AP sans fil lorsque le paramètre de mesure satisfait une première condition de déclenchement, d'une indication à un premier dispositif d'exécution (50) d'un système IoT, le premier dispositif d'exécution étant pointé par une première action d'exécution, dans lequel l'indication est une indication pour exécuter la première action d'exécution, dans lequel la première action d'exécution est déclenchée par la première condition de déclenchement ; et
la modification (205), par l'AP sans fil, d'un réglage de la fonction WLAN de l'AP sans fil lorsque le paramètre de mesure satisfait une deuxième condition de déclenchement ;
dans lequel la modification (205), par l'AP sans fil, d'un réglage de la fonction WLAN de l'AP sans fil lorsque le paramètre de mesure satisfait une deuxième condition de déclenchement comprend ;
l'annulation, par l'AP sans fil lorsque le paramètre de mesure indique qu'un cas d'urgence s'est produit, de toutes les authentifications WLAN pour ouvrir un WLAN.

2. Procédé selon la revendication 1, dans lequel le procédé comprend également :
la réception (206), par l'AP sans fil, d'une demande d'accès WLAN envoyée par un dispositif WLAN ;
l'obtention (207), par l'AP sans fil, d'informations de compte correspondant à la demande d'accès WLAN ;
l'envoi (208), par l'AP sans fil, des informations de compte à un dispositif de commande, et
l'utilisation (208), par le dispositif de commande, des informations de compte pour commander, lorsqu'il est déterminé sur la base d'informations de compte envoyées par au moins deux AP sans fil qu'une troisième condition de déclenchement est satisfaite, à un second dispositif d'exécution (50) du système IoT, le second dispositif d'exécution étant déclenché par la troisième condition de déclenchement et le second dispositif d'exécution étant lié à un emplacement du dispositif WLAN, de s'allumer ou de s'éteindre.

3. Procédé selon la revendication 1, dans lequel le procédé comprend également :
l'obtention (209), par l'AP sans fil lorsque le paramètre de mesure indique qu'un cas d'urgence s'est produit, d'informations d'accès sans fil qui sont obtenues sur la base de la fonction WLAN, dans lequel les informations d'accès sans fil comprennent un ou plusieurs des éléments suivants : une quantité de dispositifs WLAN accédant à la fonction WLAN, des informations d'emplacement des dispositifs WLAN et des informations d'identité des utilisateurs qui utilisent les dispositifs WLAN ; et
l'envoi (210), par l'AP sans fil, d'une alarme de sécurité, dans lequel l'alarme de sécurité est utilisée pour indiquer qu'un cas d'urgence s'est produit, et l'alarme de sécurité transporte les informations d'accès sans fil.

4. Procédé selon la revendication 1, dans lequel l'obtention (201), par un AP sans fil, d'un paramètre de mesure collecté par un capteur IoT (404) comprend :
l'obtention, par l'AP sans fil, d'un paramètre de mesure sous la forme d'un signal analogique collecté par le capteur IoT (404) ; et
la conversion, par l'AP sans fil, du paramètre de mesure sous la forme d'un signal analogique en un paramètre de mesure sous la forme d'un signal numérique.

5. Point d'accès sans fil, AP, dans lequel l'AP sans fil comprend une coque (401), un processeur (402), un circuit (403) de réseau local sans fil, WLAN, et un capteur (404) de l'Internet des objets, IoT ; et le processeur, le circuit WLAN et le capteur IoT sont intégrés dans la coque ;
dans lequel le processeur (402) est configuré pour réaliser les étapes réalisées par l'AP sans fil dans le procédé selon l'une quelconque des revendications 1 à 3.

6. AP sans fil selon la revendication 5, dans lequel
le capteur IoT (404) et le processeur (402) sont fixés sur une même carte de circuit imprimé ; et/ou
le capteur IoT (404) est connecté au processeur (402) à l'aide d'un câble d'extension.

7. AP sans fil selon la revendication 5, dans lequel un circuit de conversion analogique-numérique (4051) est en outre disposé entre le capteur IoT (404) et le processeur (402) ; et
le circuit de conversion analogique-numérique (4051) est configuré pour : obtenir un paramètre de mesure sous la forme d'un signal analogique collecté par le capteur IoT (404), convertir le paramètre de mesure sous la forme d'un signal analogique en un paramètre de mesure sous la forme d'un signal numérique, et transmettre le paramètre de mesure sous la forme d'un signal numérique au processeur (402).

8. Programme informatique comprenant des instructions qui, lorsqu'elles sont exécutées par un point d'accès sans fil, AP, amènent le point d'accès sans fil selon la revendication 5 à exécuter les étapes du procédé selon la revendication 1.

9. Support lisible par ordinateur sur lequel est stocké le programme informatique selon la revendication 8.
